# EUROPEAN PATENT APPLICATION

(11) **EP 4 228 067 A2**
(43) Date of publication of application: **16.08.2023**
(21) Application number: 23155873.5
(22) Date of filing: 09.02.2023
(51) Int. Cl.: H01M 50/202, H01M 50/209, H01M 50/233, H01M 50/236, H01M 50/238, H01M 50/242, H01M 50/249, H01M 50/287, H01M 50/358, B60K 1/04, B60L 50/64

(54) **METHOD AND APPARATUS FOR BATTERY SAFETY STRUCTURE**

(30) Priority: 10.02.2022 US 202263308593 P
(71) Applicant: VOLVO CAR CORPORATION, 405 31 Göteborg (SE)
(72) Inventor: LODEWIJK SCHMETZ, Antonius, 405 31 GÖTEBORG (SE)
(74) Representative: Kransell & Wennborg KB

(57) **Abstract**

A safety structure for a battery pack assembly includes: an inner layer adapted to be disposed proximate to a plurality of cells of the battery pack assembly, wherein the inner layer defines at least one hollow channel open towards the plurality of cells and configured to vent any of heat, gas, particles, and fire away from selected ones of the plurality of cells; an outer layer adapted to be disposed distal to the plurality of cells of the battery pack assembly; and a resilient layer disposed between the inner layer and the outer layer. The inner layer is a fire-resistant layer comprising a heat-resistant and/or flame-resistant material. The outer layer is a structural layer comprising a substantially rigid material. The resilient layer is adapted to decouple the inner layer from deformation of the outer layer.

## Description

### TECHNICAL FIELD

The present disclosure generally relates to the automotive and battery energy storage (BES) fields. More specifically, the present disclosure relates to a layered safety structure for a vehicle utilizing a battery pack.

### BACKGROUND

The drivable range of an electric vehicle (EV) is one of the primary disadvantages when compared to a conventional internal combustion engine (ICE) vehicle or hybrid electric vehicle (HEV). Recent developments in battery technology have drastically increased the energy density and storage capacity of EV and HEV batteries. Of the various battery technologies, Lithium-ion batteries are sometimes preferred for their high energy density. These batteries can on occasion experience thermal runaway from overcharging, voltage imbalances, short-circuiting events, and mechanical damage.

Thermal runaway events are dynamic; an EV battery that is experiencing thermal runaway can respond in several ways, most often presenting as a jet-like flame that erupts from the battery. Within the battery, thermal runaways often emit soot and particles and generate a large buildup of gasses that further increase the danger of thermal runaways, spreading from cell to cell.

Moreover, with the ever-increasing energy densities and cell counts of battery packs, even more energy will be present during thermal runaway events which lead to longer higher temperatures and longer burn times. Further, with increasingly strict government standards, more robust battery safety structures will be required. Accordingly, there exists a need for devices and methods in the field of battery pack assemblies for improved impact protection of battery cells and fire protection.

This background information is provided as environmental context only. It will be readily apparent to those of ordinary skill in the art that concepts and principles of the present disclosure may be applied in other environmental contexts equally. For example, although a vehicular implementation is illustrated and described herein, the concepts and principles of the present disclosure may be applied in non-vehicular implementations equally.

### SUMMARY

The present disclosure provides a vehicle battery safety structure and method for preparing the same. In particular, a layered assembly is provided having a plurality of chargeable/dischargeable battery cells and an underlying safety structure. The safety structure can be positioned directly below the battery cells, and the battery cells may be positioned upside down with respect to the safety structure. In such implementation, the safety structure may form a bottom structural surface of a vehicle. Advantageously, the safety structure includes at least one venting channel that can be coupled to a venting portion of the battery and designed to direct gasses that are accumulating during a thermal runaway away from the battery and other batteries. The safety structure also mitigates the deformation experienced by the battery during impact to reduce the chances of cell damage. All references mentioned in this disclosure are hereby incorporated by reference in their entirety.

One aspect of the present disclosure pertains to a safety structure for a battery pack assembly that includes an inner layer, an outer layer, and a resilient layer. The inner layer can be manufactured to include at least one hollow channel which is configured to vent: for example, heat, gas, flames, and/or particulate matter generated during a thermal runaway away from the battery to prevent over-pressurization and further damage to the battery and other batteries. The outer layer can be a vehicular structural layer and can be separated from the inner layer via a resilient layer.

In such an aspect, the inner layer can be a fire-resistant layer comprising a heat-resistant and/or flame-resistant material. Further, the inner layer can be made from a non-conductive material. The outer layer can be constructed of a substantially rigid material. The resilient layer can decouple the inner layer from the deformation experienced by the outer layer. Optionally, the resilient layer can be an adhesive layer that serves to bond the inner layer to the outer layer. The safety structure further includes the outer layer located distal to the plurality of cells. The outer layer can be constructed of a substantially rigid and lightweight material and configured to be impact resistant. The resilient layer can be disposed between said inner and outer layers and can be configured to adhesively bond the layers. It is contemplated that such a battery pack may form a bottom structural surface of a vehicle. It is contemplated that the inner layer can be adapted to receive at least one busbar and/or printed circuit board coupled to one or more of the plurality of cells of the battery pack. Optionally, the outer layer can be adapted to form the bottom structural surface of a vehicle.

A further aspect of the present disclosure pertains to a battery pack assembly, having a plurality of cells and a safety structure disposed directly below the plurality of cells. The safety structure includes an inner layer proximate to the plurality of cells and further defines therein at least one channel extending therethrough that is adapted to direct any of heat, gas, particulate matter, and fire away from selected ones of the plurality of cells. In such an aspect, contacts of the plurality of cells are disposed in a downward orientation. Optionally, the safety structure can be underneath the plurality of cells and the outer layer forms a bottom structural surface of a vehicle.

A yet further aspect of the present disclosure pertains to a method of manufacturing a safety structure for a vehicle battery. The method includes forming an inner layer of fire-resistant material that defines at least one hollow channel designed to vent any of heat, gas, particles, or fire away from the pack and forming an outer layer of a lightweight impact-resistant material. The method also includes adhering the inner layer and outer layer via a resilient layer. It is contemplated that the resilient layer can be a foam or polymeric material. Further, the resilient layer can be thermoformed. The inner layer can comprise at least one pre-assembled busbar and/or printed circuit board.

### BRIEF DESCRIPTION OF THE DRAWINGS

The advantages and features of the present disclosure will become better understood with reference to the following more detailed description taken in conjunction with the accompanying drawings, in which like elements are identified with like symbols, and in which:
FIG. 1 is a perspective view of one exemplary embodiment of the battery and safety structure according to the present disclosure;
FIG. 2 is an exploded view of the battery and safety structure of FIG. 1;
FIG. 3 is a side view of one exemplary embodiment of the battery and safety structure according to the present disclosure;
FIG. 4 is a perspective view of the safety structure according to the present disclosure;
FIG. 5 is an expanded view of the safety structure depicted in FIG. 4; and
FIG. 6 is a flowchart of a method for manufacturing a battery safety structure for a vehicle.

### DETAILED DESCRIPTION

Again, the present disclosure generally provides a battery pack assembly including a layered safety structure. Further, the safety structure can be positioned below the battery cells and the battery cells can be positioned upside down, such that any venting of the battery cells occurs in a direction toward the safety structure and away from the battery pack. The safety structure includes an inner layer subjacent to the battery cells and formed of fire-resistant material, an outer layer distal to the battery cells and proximal from the inner layer and configured for impact resistance, and a resilient layer formed of for example, a foam material and positioned between the inner layer and the outer layer. In particular, the resilient layer can be configured to adhesively join the inner and out layer.

The layered safety structure can provide a lightweight design with improved impact and fire safety. The layered safety structure allows for the deformation of the outer layer and inner layer to be decoupled during impact. The resilient layer can help distribute the load on the inner layer by dissipating impact forces. By distributing the load on the inner layer, the deformation of the battery cells can be minimized. As such, the structural requirements for the battery pack can be lower for impact. In some embodiments, each of the layers are configured to retard the acceleration of a thermal runaway event.

The fire-resistant material of the inner layer can be a fire-retardant composite material. In some embodiments, the composite material can be an SMC composite, for example, a GF UP FR composite or a GF phenolic composite. The inner layer includes venting channels to control the flow of hot reaction gasses, heat, flames, and/or particulates emitted for example during a thermal runaway. Advantageously, the vents are configured to direct the thermal runaway products away from the battery pack, such as to an end of the battery pack.

It is contemplated that the inner layer can provide a housing or substrate for components in electrical communication with the battery. In particular, the inner layer structure can be formed to provide the same functionality as a busbar carrier. The inner layer can also house at least one flexible printed circuit board.

In a first assembly step, the inner layer can be assembled for example with pre-assembled busbars and flex printed circuit boards (PCBs). The inner layer includes welding access holes to provide welding access to the busbars. In a second step, the outer layer and resilient layer are assembled. The resilient layer can be a foam material, for example, Polyethylene Terephthalate (PET), which can be one hundred percent recycled PET. The resilient layer can also be thermoformed. Advantageously, the layered safety structure can facilitate and receive cabling. A further advantage is the resilient layer can fix the assembled cables in place during the thermoforming process or otherwise, which obviates the need for extra tolerance considerations for the cable assembly.

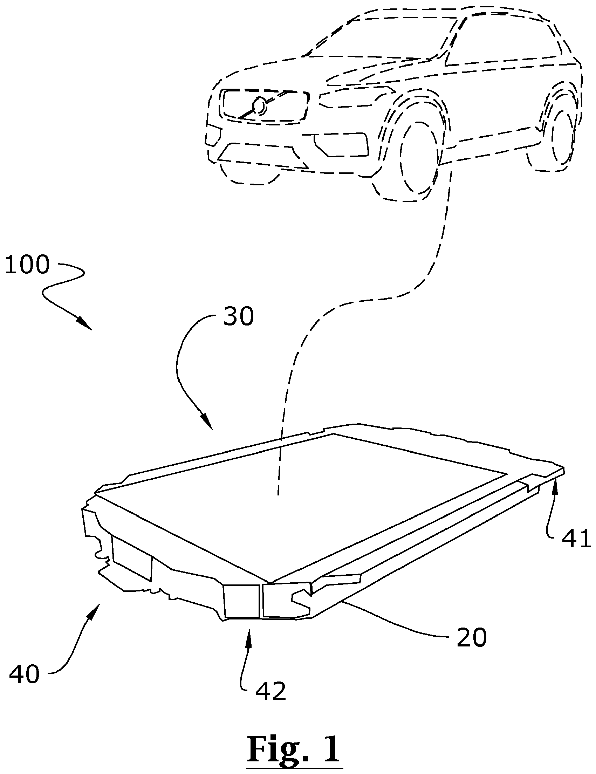

FIG. 1 is a perspective view of one exemplary embodiment of the battery pack assembly 100 of the present disclosure. Referring to FIG. 1, in one exemplary embodiment, the battery pack 100 includes a bank of least one chargeable/dischargeable battery cells 20 in electrical communication with one another and the components of the vehicle and a safety structure 30. The battery pack 100 can also include an enclosure or frame 40 configured to contain therein the at least one battery cells 20. The frame 40 can include additional structural features such as a flange 41. The details of the top and side portions of this frame 40 are not the subject of the present disclosure. It is envisioned that such a structure 100 will serve as an energy storage means for an EV or HEV. It is contemplated that the present disclosure can provide energy storage for, for example, vehicles, off-road vehicles, industrial machines, aircraft, motorcycles, agricultural machinery, or the like. It is further contemplated that the battery pack assembly 100 can form, in part, the bottom structural surface of a vehicle. Embodiments of the device according to the present disclosure can also be incorporated into stationary devices and infrastructure and configured to provide energy storage thereto.

The safety structure 30 can be attached to the battery cells 20 or simply disposed about the battery cells 20, with another structure actually retaining the battery cells 20. Advantageously, the safety structure 30 can be attached to the battery cells 20 on a bottom surface thereof wherein the battery cells 20 are oriented upside down relative to the vehicle, with contacts and vents of the battery cells disposed in a downwards orientation facing the underlying safety structure 30. In such an arrangement, the venting of the battery cells can be better controlled by the safety structure 30, with the safety structure 30 also serving as an impact protector for the battery cells 20. As illustrated, the battery cells 20 and safety structure 30 form a relatively thin combined structure such that the whole assembly can be disposed along the bottom of the vehicle, underneath the passenger cabin and other vehicle structures.

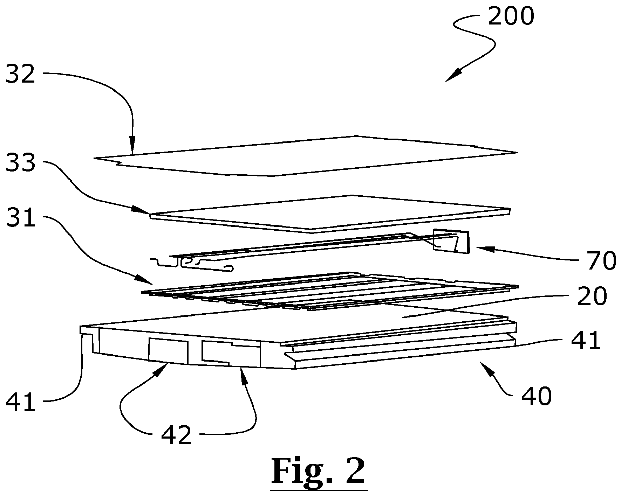

Turning now to FIG. 2, an exploded view 200 of the battery pack assembly 100 of FIG. 1 is provided, with the battery pack assembly 100 flipped upside down for clarity. Referring to FIGS. 1 and 2, the battery pack assembly 100 can include a battery cell frame 40, battery cells 20, cabling and electrical connections 70, and a safety structure 30. In such an embodiment, the safety structure 30 can be positioned on the underside of the battery pack 100. In particular, the electrical contacts and venting portions battery cells 20 are oriented away from the cabin of the vehicle and are arranged to vent toward the safety structure 30. In embodiments, the disclosure includes at least one busbar 70 having a flexible PCB joined thereto, for example, by welding, wherein components of the flex PCBs are configured to monitor respective battery cells 20 for control and other purposes.

Continuing with FIG. 2, in certain embodiments, the battery pack 100 includes at least one membrane 42 disposed at an end of the battery pack 100. The membrane 42 is configured to receive venting from the safety structure 30 and vent any heat, gas, flames, and particles away from the vehicle and battery pack 100. It is envisioned that the membrane 42 may be a structural element of the battery pack 100 and configured to be resistant to deformation. Such membranes 42 are well known to those of ordinary skill in the art.

The safety structure 30 is of the layered type and can be positioned below the battery cells 20, such that the battery cells 20 are oriented upside down. During a thermal runaway, such an orientation can better direct, for example, fire, particles, gas, and heat toward the safety structure 30. In particular, the safety structure 30 is adapted to receive venting of the battery cells 20. The safety structure 30 includes an inner layer 31, an outer layer 32, and a resilient layer 33. The inner layer 31 is formed of a fire-resistant material or fire-retardant composite material for example an SMC, GF UP FR composite, or a GF phenolic composite.

Referring to FIG. 2, the battery pack assembly 200 (flipped upside down for clarity) includes the battery cell frame 40 and battery cells 20, which may be in any conventional or novel arrangement suitable for disposition at the bottom portion of a vehicle or the like. As mentioned previously, the electrical contacts and venting portions of the battery cells 20 may be disposed in a downwards orientation, such that, in a thermal runaway event, flames, heat, and gasses are vented downwards towards the bottom of the vehicle or the like. The safety structure 30 of the present disclosure is disposed adjacent to the battery cells 20 underneath the battery cell frame 40 and is designed to protect the battery cells 20 and receive any flames, heat, and gasses vented from the battery cells 20 during a thermal runaway event, channeling such expulsion away from the battery cells 20 and, optionally, into/through, the membrane(s) 42 associated with the battery cell frame 40 at the outer periphery thereof.

The safety structure 30 is multi-layered and includes the inner layer 31 that defines venting channels adjacent to the battery cells 20 designed to conduit the expulsion as described, a structural outer layer 32 having sufficient rigidity such that it protects the battery cells 20 and may form a structural element of the vehicle or the like, and a resilient layer 33 disposed between the inner layer 31 and the outer layer 32. The resilient layer 33 serves to span the distance between the inner layer 31 and the outer layer 32. The resilient layer 33 may adhesively bond the inner layer 31 and the outer layer 32, and may decouple the inner layer 31 from deformation of the outer layer 33 to some extent. A surface of the inner layer 31 opposite the battery cells 20 may be configured to receive a busbar assembly and/or cabling 70, which may be surrounded by and/or encased within the resilient layer 33. Appropriate ports are provided through the inner layer 31 such that electrical connections may be made between the busbar and/or cabling 70 and the battery cells 20 when the inner layer 31 is disposed adjacent to the battery cells 20 and joined with the battery cell frame 40. Each of these aspects is described in greater detail herein below.

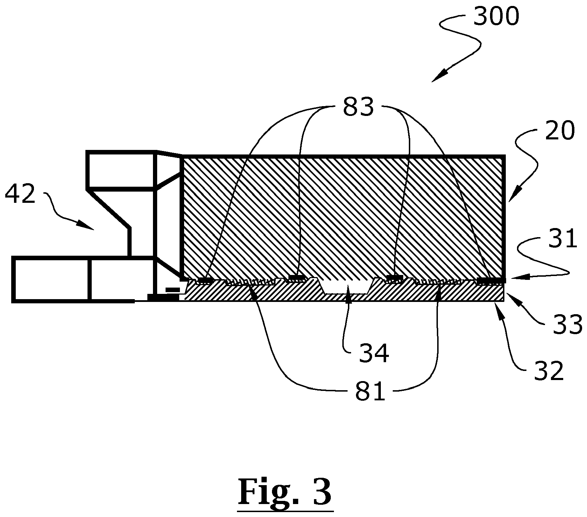

Referring to FIG. 3, a cross-sectional view of an embodiment 300 of the battery pack assembly 100 of FIGS. 1 and 2 is provided. The inner layer 31 includes a base structure having at least one hollow venting channel 34 formed therein. These venting channels 34 may be stamped, molded, or otherwise formed in the inner layer 31 and may run longitudinally, laterally, diagonally, or any combination thereof. The venting channels 34 are sized such that a fluid communication path is provided for flames, heat, and gas emitted by the battery cells 20 in a thermal runaway event or the like. In some embodiments, the venting channels 34 are in mechanical communication with the battery cells 20 and are disposed on a side of the base structure adjoining/facing the battery cells 20 such that venting from the battery cells 20 is received by the venting channels 34. In some embodiments, the inner layer 31 is adhered to the underside of the battery cells 20 via adhesive 83, although this is not a requirement in all cases. In certain embodiments, the venting channels 34 form a junction with the membrane 42 at an end of the battery pack 100 and are configured to provide venting to the membrane 42. The venting channels 34 are configured to direct any of heat, gasses, flames, particles, or products of combustion away from the battery cells 20 and/or vehicle.

Further, in some embodiments, a burst valve (not shown) is positioned at an end of each venting channel 34, wherein the burst valve is adapted to rupture to vent gasses away from the battery pack assembly. In some embodiments, the structure includes at least one busbar in electrical communication with the battery cells 20 disposed in/adjacent to said inner layer 31. The inner layer 31 can provide welding access via busbar welding points 81 located within the inner layer 31, which provide access through the inner layer 31 and allow electrical coupling of the busbar to the battery cells 20 in various locations.

More specifically, the inner layer 31 can form access holes, for example, cut-outs that are configured to provide busbar welding access 81, although other joining means are considered. Such welding access holes 81 facilitate the formation of connections of the busbars 70. In certain embodiments, the weld holes 81 provide at least one connection locus for the cables. It is through welding or other joining techniques that electrical communication is established. In certain embodiments, it is envisioned that the welding access holes 81 are configured to be accessible by for example laser welding, while other welding techniques are contemplated.

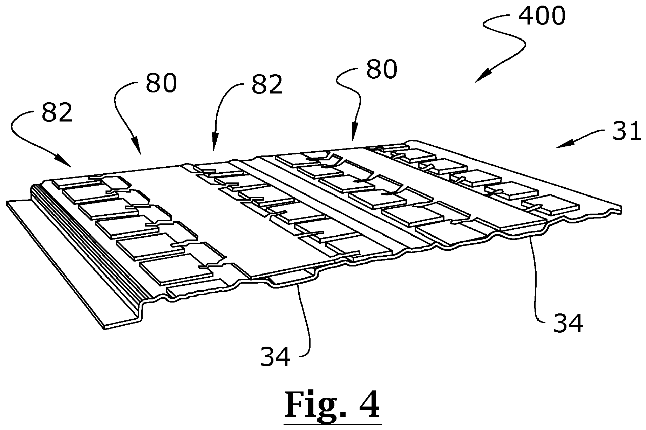

Turning now to FIG. 4, a perspective view of an embodiment of the inner layer 400 is provided. As discussed above, the inner layer 31 can include one or more venting channels 34 adapted to vent matter away from the battery cells 20 and/or vehicle. The venting channels 34 are formed within the inner layer 31 and span longitudinally therethrough in the embodiment illustrated. Lateral and/or diagonal venting channels 34 are also contemplated herein. Thus, it is contemplated that in some embodiments, the venting channels 34 are disposed transversely therethrough. Other orientations of the venting channels 34 are contemplated. In embodiments, the venting channels 34 may terminate at a location within the inner layer 31. The venting channels 34 are configured to be substantially fire-resistant and sizeably configured to transport any of heat, gas, fire, and particulate matter.

Continuing with FIG. 4, in some embodiments, the disclosure may include at least one flexible PCB 82 disposed proximal to the inner layer 31. It is contemplated that the PCBs 82 are in electrical communication with the battery cells 20 and are configured to monitor the voltage thereof, for example. The inner layer 31 can provide the same functionality as a busbar and/or PCB carrier. In some embodiments, the inner face 31 can be configured to contain pre-assembled PCBs. It will be readily apparent to those of ordinary skill in the art that the PCBs 82 may be disposed on/adjacent to an inner surface or an outer surface of the inner layer 31, proximal or distal to the battery cells 20, with the inner layer 31 acting as a suitable carrier and providing the appropriate access/welding ports 81 for making the required electrical connections.

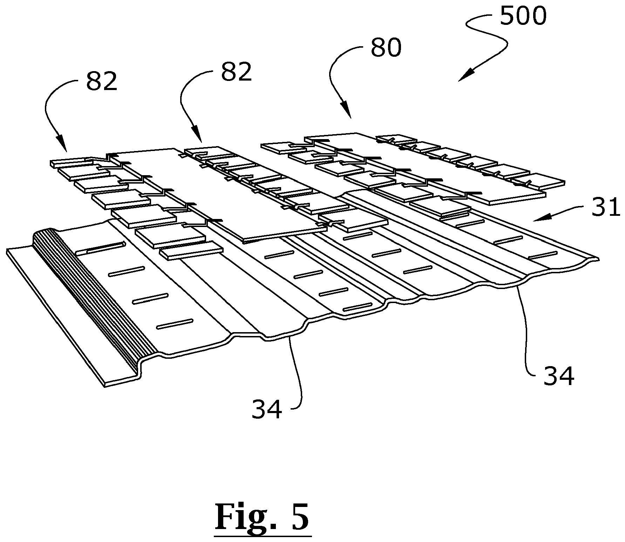

FIG. 5 provides an exploded view of FIG. 4 of the inner layer 31 according to the present disclosure. More particularly, an exploded view of the busbar and PCB assembly 500 is shown. Referring now to FIGS. 4 and 5, the inner layer 31 forms ribs extending there-across, the ribs (not shown) are adapted to join the inner layer 31 and the battery cells 20, for example via an adhesive bond. In various embodiments, the joining surface of the inner layer 31 includes physical limiters formed thereon that are adapted to control the thickness of the adhesive bonds that are formed between the battery cells 20 and the inner layer 31. Such physical limiters can be utilized for controlling an amount of adhesive disposed therebetween. In some embodiments, the inner layer 31 is oriented below the battery cells 20.

Continuing with FIG. 5, the inner layer 31 is adapted to provide a plurality of busbars 80 and PCBs 82. In some embodiments, the inner layer 31 forms regions sizeably configured to receive the busbars 80, busbar traces (not shown) that are adapted to connect to the flex PCBs 82, and the flex PCBs 82. It is envisioned that the PCBs 82 are in electrical communication with the battery cells 20 and are configured to monitor for example voltage, temperature, amperage, etc. In embodiments, the busbars 80 are positioned within, partially within, or over the venting channels 34. In the embodiment illustrated, the regions include flat surfaces on each side of a venting channel, for example between the venting channel 34 and a rib, which is adapted to receive a busbar 80 and include cuboid-shaped regions adapted to receive flex PCBs 82. Advantageously, by forming these regions in the inner layer 31, quick formation of the busbar assembly 500 can be facilitated during manufacturing. In some embodiments, the flat surfaces are formed within the venting channel 34 and the busbar 80 is joined thereto via an adhesive, for example, spot adhesives. In some embodiments, connection channels are formed in the ribs positioned between the busbars 80 and the flex PCBs 82 and are adapted to receive the busbar traces.

In various embodiments, the busbar and PCB assembly, including the inner layer 31, the busbar 80, and the flex PCBs 82 are pre-assembled prior to the inner layer 31 being joined to the battery cells 20. After which, the various connections to the battery cells 20 are formed via the weld holes 81 formed in the inner layer 31.

Referring back FIGS. 1 and 2, in some embodiments, the cables 70 generally extend between the inner layer 31 and the outer layer 33, on a side of the inner layer 31 opposite the battery cells 20. The resilient layer 32 is positioned between the inner layer 31 and the outer layer 33. In some embodiments, the resilient layer includes a foam material, for example PET, which in embodiments, can be one-hundred percent recycled PET. In some embodiments, the resilient layer 32 can be thermoformed. In these embodiments, the cables 70 are affixed by the thermoformed resilient layer 32. In some embodiments, the resilient layer 32 is joined to the inner layer 31 during the thermoforming process, for example by utilizing the heat of the thermoforming process to cure an adhesive film positioned between the resilient layer 32 and the inner layer 33. In embodiments, the resilient layer 32 is a generally solid structure that covers the weld holes 81 of the inner layer 31.

The outer layer 33 is positioned opposite the inner layer 31 relative to the resilient layer 32, such that the resilient layer 32 is "sandwiched" by the outer layer 33 and the inner layer 31. In embodiments, the outer layer 33 is a lightweight plate formed of impact-resistant material, for example, aluminum. However, other lightweight impact-resistant materials are also contemplated. In some embodiments, the outer layer 33 can be joined to the resilient layer 32 during the thermoforming process of the resilient layer 32 where an adhesive, positioned between the outer layer 33 and the resilient layer 32, can be cured by the heat of the thermoforming process. In some embodiments, the outer layer 33 can be also joined to the battery cell enclosure 40, for example via welding. In some embodiments, one of the outer layer 33 and the battery cell enclosure 40 includes physical limiters formed therein that are adapted to control a bond line between the outer layer 33 and the battery cell enclosure 40.

It is contemplated that the outer layer 33 is configured to decouple the battery cells 20 from the safety structure 30 during impact events. More particularly, it is contemplated that the outer layer 33, during an impact, advantageously will mitigate stress experienced by the battery cells 20. It is contemplated that the outer layer 33 acts as a shield or boundary for the battery cells 20 from mechanical damage, puncture, and/or deformation of the cells 20.

In embodiments, the inner layer 31 and the resilient 32 are sizeably configured to cover the battery pack 100, without laterally overlapping with flanges 41 of the battery cells frame 40. As such, the outer layer 33 can be joined to both the resilient layer 32 and to the flanges 41 of the battery cell frame 40. In some embodiments, an area is formed that is not covered by the inner layer 31 and the resilient layer 32. This area can be used for cable routing and offers space for deformation of the structure in a crash, impact, or the like without that deformation impacting the inner layer 31, battery cells 20, and the resilient layer 32. In some embodiments, for example resilient foam blocks are added in this area to prevent free movement of the cables 70 therein and to provide support for the outer layer 33.

In embodiments, the inner layer 31 can be formed of a non-conductive material to prevent short circuits of the battery cells 20, and the outer layer 33 can be formed of a conductive material to provide electromagnetic shielding for the battery pack 100.

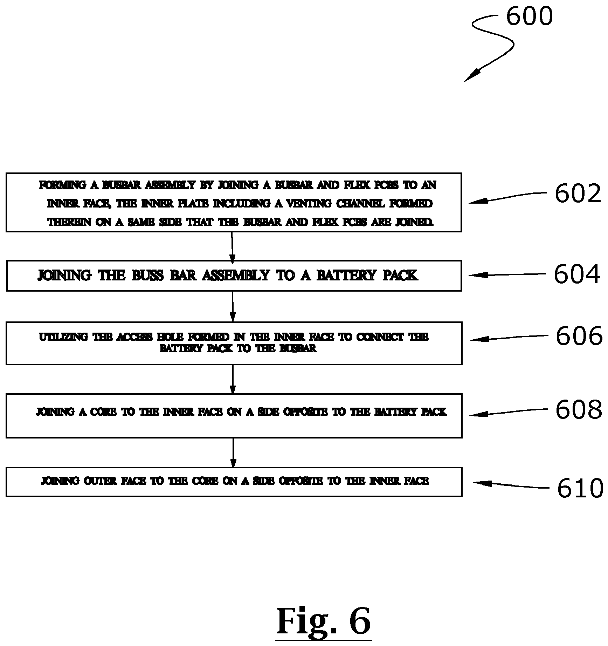

FIG. 6 is a flowchart of a method for assembling a battery pack assembly 600. The method includes forming a busbar assembly 602 by joining a busbar 80 and flex PCBs 82 to an inner layer 31, the inner layer 31 including at least one venting channel 34 formed therein on a same side that the busbar 80 and flex PCBs 82 are joined to at step 602. In some of these embodiments, the flex PCBs 82 are welded to the busbar 80 and are in electrical communication.

The method also includes joining the busbar & PCB assembly 500 to a battery pack at step 604. The busbar 80 and the flex PCBs 82 are positioned between the inner layer 31 and the battery pack 100. The method further includes utilizing weld holes 81 formed in the inner layer 31 to connect the battery pack 100 to the busbar 80 at step 606. The method yet further includes joining a resilient layer 32 to the inner layer 31 on a side opposite to the battery pack 100 at step 608. The method still further includes joining outer layer 33 to the resilient layer 32 on a side opposite to the inner layer 31 at step 610. In embodiments, the resilient layer 32 is thermoformed and steps 608 and 610 are performed simultaneously by utilizing heat of the thermoforming process to cure adhesives that join the inner layer 31 and the resilient layer 32 and that join the resilient layer 32 and the outer layer 33.

By pre-assembling the busbar & PCB assembly and forming the safety structure 30 (the inner layer 31, resilient layer 32 and outer layer 33) thereafter, the weld holes 81 for forming connections with the battery pack 30 only need to be positioned within the inner layer 31 and can be covered by a continuous resilient layer 32 and a continuous outer layer 33, providing a homogeneous compression stiffness of the safety structure 30 orthogonal to the plane formed by the top face, resulting in the structure being less sensitive to changes in impact location and impactor size. Thereby, the impact behavior of the safety structure is predictable and consistent.

As noted above, venting channels 34 are formed in the inner layer 31 to allow for relief of heat and pressure of the battery cells 20 during a thermal runaway. In particular, the venting channels can 34 transport any of heat, gas, flames, particles, and products of combustion to an end of the battery pack and exits via burst valves (not shown). With the transport of the hot gases away from the battery pack 100, the onset of thermal runaway of neighboring battery cells can be prevented.

Unless defined otherwise, all technical and scientific terms used herein have the same meaning as commonly understood by one of ordinary skill in the art to which this invention pertains.

Although the present disclosure is illustrated and described herein with reference to illustrative embodiments and specific examples thereof, it will be readily apparent to those of ordinary skill in the art that other embodiments and examples can perform a similar function and/or achieve like results. All such equivalent embodiments and examples are within the spirit and scope of the present disclosure, and contemplated thereby, and are intended to be covered by the following non-limiting claims for all purposes.

This completes the description of the preferred and alternate embodiments of the disclosure. Those skilled in the art can recognize other equivalents to the specific embodiment described herein which equivalents are intended to be encompassed by the embodiments attached hereto.

### Clauses

1) The safety structure of any of the aforementioned embodiments, wherein the resilient layer defines one or more paths through which cables or wires are routed to one or more cells of the battery pack assembly.
2) The battery pack assembly of any of the aforementioned embodiments, wherein contacts of the plurality of cells are disposed in a downwards orientation.
3) The battery pack assembly of any of the aforementioned embodiments, wherein the safety structure is disposed underneath the plurality of cells and the outer layer forms a bottom structural surface of a vehicle.
4) The method of any of the aforementioned embodiments, wherein the resilient layer is thermoformed.
5) The method of any of the aforementioned embodiments, wherein the inner layer retains at least one electrical connector.

## Claims

1. A safety structure for a battery pack assembly, the safety structure comprising:
an inner layer adapted to be disposed proximate to a plurality of cells of the battery pack assembly, wherein the inner layer defines at least one hollow channel open towards the plurality of cells and configured to vent any of heat, gas, particles, and fire away from selected ones of the plurality of cells;
an outer layer adapted to be disposed distal to the plurality of cells of the battery pack assembly; and
a resilient layer disposed between the inner layer and the outer layer.

2. The safety structure of claim 1, wherein the inner layer is a fire-resistant layer comprising a heat-resistant and/or flame-resistant material.

3. The safety structure of claim 2, wherein the inner layer comprises a non-conductive material.

4. The safety structure of claim 1, wherein the outer layer is a structural layer comprising a substantially rigid material.

5. The safety structure of claim 1, wherein the resilient layer is adapted to decouple the inner layer from deformation of the outer layer.

6. The safety structure of claim 5, wherein the resilient layer comprises a polymeric foam material.

7. The safety structure of claim 1, wherein the resilient layer is an adhesive layer that serves to bond the inner layer to the outer layer.

8. The safety structure of claim 1, wherein the inner layer is adapted to receive at least one busbar or printed circuit board coupled to one or more of the plurality of cells of the battery pack assembly.

9. The safety structure of claim 1, wherein the at least one hollow channel defined by the inner layer is aligned longitudinally and terminates in an opening disposed adjacent to an edge of the battery pack assembly.

10. The safety structure of claim 1, wherein the opening disposed adjacent to the edge of the battery pack assembly is adapted to be disposed adjacent to a membrane of the battery pack assembly.

11. The safety structure of claim 1, wherein the inner layer defines one or more ports through which one or more cells of the plurality of cells of the battery pack assembly can be accessed and/or welded.

12. The safety structure of claim 1, wherein the outer layer is adapted to form a bottom structural surface of a vehicle.

13. A battery pack assembly, comprising:
a plurality of cells;
a safety structure comprising:
an inner layer disposed proximate to the plurality of cells, wherein the inner layer defines at least one hollow channel open towards the plurality of cells and configured to vent any of heat, gas, particles, and fire away from selected ones of the plurality of cells;
an outer layer adapted to be disposed distal to the plurality of cells; and
a resilient layer disposed between the inner layer and the outer layer.

14. A method for manufacturing a safety structure for a battery pack, the method comprising steps of:
forming an inner layer of a fire-resistant material, wherein the inner layer defines therein at least one hollow channel adapted to be disposed open towards a plurality of cells of the battery pack and configured to vent any of heat, gas, particles, or fire therefrom;
forming an outer layer of an impact-resistant material; and
disposing a resilient layer between the inner layer and the outer layer.

15. The method of claim 14, further comprising the step of joining the safety structure to the battery pack in mechanical communication, with the at least one electrical connector joined to the plurality of cells of the battery pack in electrical communication.
